# FASCICULE DE BREVET EUROPEEN

(11) **EP 2 317 478 B1**
(45) Date de publication et mention de la délivrance du brevet: **10.03.2021**
(21) Numéro de dépôt: 10306188.3
(22) Date de dépôt: 29.10.2010
(51) Int. Cl.: G06T 11/60, G06T 11/00

(54) **Procédé et système de visualisation d'un revêtement d'une surface**
Verfahren und System zur Visualisierung einer Beschichtung einer Oberfläche
Method and system for viewing a coating of a surface.

(30) Priorité: 02.11.2009 FR 0957726
(43) Date de publication de la demande: 04.05.2011
(73) Titulaire: KEOPS CONCEPT, 18000 Bourges (FR)
(72) Inventeur: Amyot, Sébastien, 18500, BERRY-BOUY (FR)
(74) Mandataire: Delprat, Olivier

(56) Documents cités:
- US-A1- 2002 175 942
- US-A1- 2003 174 882
- US-A1- 2006 102 252
- US-B1- 6 292 197
- Boole & partners: "Calepilight - Calepinage Modulaire de Surfaces, Manuel d'Utilisation V1.10", , 12 décembre 2006 (2006-12-12), XP002589539, Extrait de l'Internet: URL:http://www.boole.eu/pdf/Manuel_CL.pdf [extrait le 2010-06-29]
- LEFEBVRE L ET AL: "Analysis and synthesis of structural textures", PROCEEDINGS GRAPHICS INTERFACE 2000 CANADIAN HUMAN-COMPUT. COMUN. SOC WATERLOO, ONT., CANADA, 2000, pages 77-86, XP002589540, ISBN: 0-9695338-9-6

## Description

L'invention concerne, de manière générale, la simulation de changements de revêtement sur une surface et se rapporte plus particulièrement à la simulation d'un changement de revêtement sur une image numérique d'une surface d'une pièce d'une habitation.

Elle concerne également, de manière générale, la visualisation d'un revêtement de surface, c'est-à-dire un outil d'aide à la création d'un revêtement simulant l'assemblage et la pose réelle du revêtement.

Il s'agit ainsi, en particulier, de permettre à un utilisateur de simuler des changements de décor au sein de son habitation.

Il existe déjà, dans l'état de la technique, des procédés et des systèmes permettant à un utilisateur de procéder à de telles simulations de changement de revêtement. On pourra à cet égard se référer au brevet français n° 0 505 835, au nom du présent demandeur, qui propose un outil permettant à un utilisateur de réaliser des prises de vues d'une surface dont il convient de modéliser un changement de matière et d'appliquer sur l'image numérique ainsi obtenue, des revêtements de surface, tels que carrelage, parquet, peinture ou papier peint en vue de présenter à l'utilisateur les résultats correspondants.

Le procédé décrit dans ce document préconise l'utilisation d'une grille qui vient se superposer et se déformer sur la surface à simuler en vue de prendre en compte la perspective de la surface.

On pourra également se référer aux documents EP-A-0 687 372 et US-A-5 537 638 qui décrivent d'autres techniques de simulation de changements de surface.

Selon les techniques conventionnelles, le revêtement à appliquer sur la surface à décorer est choisi parmi un ensemble de revêtements préalablement stockés en mémoire.

Par conséquent, lorsque le revêtement est constitué d'un ensemble de pièces supplémentaires agencées de manière à former des motifs répétitifs, ce qui est le cas lorsqu'il s'agit de simuler l'application d'un carrelage ou d'un parquet, il n'est pas possible de simuler des changements de motifs sans les avoir préalablement stockés en mémoire, ce qui augmente de manière rédhibitoire la capacité des moyens de mémorisation mis en œuvre.

En tout état de cause, dans les procédés proposés par l'état de la technique, il n'est pas possible de personnaliser un revêtement en modifiant l'agencement des diverses pièces entrant dans la constitution des motifs répétés du revêtement.

Le document « Calepilight - Calepinage modulaire de surfaces, Manuel d'utilisation v1.10 » (ci-après D1) décrit un procédé de visualisation d'un revêtement de surface par création d'une image numérique d'un revêtement.

L'invention propose donc d'augmenter le réalisme de la simulation d'un revêtement d'une surface, en permettant une configuration des motifs répétitifs du revêtement ainsi que du mode d'assemblage des motifs ainsi personnalisés.

L'invention a donc pour objet, selon un premier aspect, un procédé de visualisation d'un revêtement d'une surface, par création d'une image numérique du revêtement, comprenant les étapes de :
- choix du revêtement et détermination d'au moins une pièce élémentaire du revêtement ;
- détermination d'un motif élémentaire répétitif ;
- assemblage des motifs élémentaires ;
- visualisation des motifs assemblés.

Ainsi, grâce à la détermination du motif élémentaire et au choix du mode de répétition du motif élémentaire pour former le revêtement, il est possible de personnaliser le revêtement, et donc de proposer des fonctionnalités accrues à l'utilisateur.

Ce procédé peut en outre comporter une étape de choix d'un mode de répétition du motif élémentaire.

Un tel procédé constitue ainsi un outil d'édition permettant de simuler sur une image l'assemblage et la pose d'un revêtement.

Selon une autre caractéristique, au cours de la détermination du motif élémentaire répétitif, on crée ledit motif par assemblage d'un ensemble d'au moins une pièce.

Dans un mode de mise en œuvre, on choisit une largeur de joint entre les pièces du revêtement.

On peut encore, lors de la détermination d'un motif élémentaire et lors de l'assemblage des motifs élémentaires, sélectionner sur un écran un des éléments ou motifs à apparier, orienter les éléments ou motifs sélectionnés, et les rapprocher de manière à former le motif ou ledit assemblage de motifs.

Par exemple, le rapprochement comprend une magnétisation tendant à solliciter les éléments ou motifs sélectionnés les uns vers les autres jusqu'à une distance correspondant à la largeur de joint.

Selon encore une autre caractéristique du procédé, au cours de l'assemblage des motifs, le déplacement de l'un des motifs provoque un déplacement correspondant de motifs préalablement assemblés par rapport à un motif d'origine.

On simplifie alors la configuration et l'assemblage des motifs élémentaires.

Le procédé peut encore comporter une étape de choix de couleur de joint.

Dans un mode de mise en œuvre, le procédé peut en outre comporter une étape de mise en mémoire de motifs élémentaires de pose de revêtement et/ou d'assemblage de motifs pour chaque revêtement choisi.

Le procédé comprend en outre une étape d'application des motifs assemblés sur une image numérique de ladite surface, comprenant une mise en perspective de l'assemblage des motifs en fonction de la perspective de l'image.

Ce procédé comporte en outre les étapes de :
- application d'une structure géométrique prédéterminée déformable sur l'image de la surface ;
- déformation de ladite structure géométrique de manière à la faire coïncider à la perspective de la surface ; et
- acquisition de caractéristiques dimensionnelles de la surface, l'application des motifs assemblés étant réalisée en fonction de la déformation de la structure géométrique et des caractéristiques dimensionnelles de la surface.

L'invention a également pour objet, selon un deuxième aspect, un système de visualisation d'un revêtement d'une surface pour la mise en œuvre d'un procédé tel que défini ci-dessus.

Ce système comporte un dispositif d'affichage apte à afficher des pièces de revêtement et des motifs appariés, et une unité de traitement associée à une interface homme-machine adaptée pour choisir un revêtement et déterminer au moins une pièce élémentaire du revêtement, déterminer un motif élémentaire répétitif, choisir un mode de répétition du motif élémentaire et assembler les motifs élémentaires.

L'unité de traitement est en outre adaptée pour choisir un mode de répétition du motif élémentaire.

Ce système peut en outre comporter une base de données dans laquelle sont stockées un ensemble de pièces de revêtement et, pour chaque pièce, un ou plusieurs motifs prédéterminés.

D'autres buts, caractéristiques et avantages de l'invention apparaîtront à la lecture de la description suivante, donnée uniquement à titre d'exemple non limitatif, et faite en référence aux dessins annexés, sur lesquels :
- la figure 1 est un schéma synoptique d'un système de simulation conforme à l'invention ;
- la figure 2 est un organigramme illustrant les principales étapes du procédé de simulation conforme à l'invention ;
- la figure 3 est une copie d'écran illustrant l'étape de choix d'une pièce élémentaire du revêtement et de création d'un motif élémentaire ;
- la figure 4 illustre l'étape de sélection de la largeur de joint ;
- la figure 5 est une copie d'écran illustrant un autre mode de mise en œuvre de choix de pièces élémentaires et de création d'un motif élémentaire ;
- les figures 6 et 7 illustrent l'étape d'assemblage des motifs élémentaires ; et

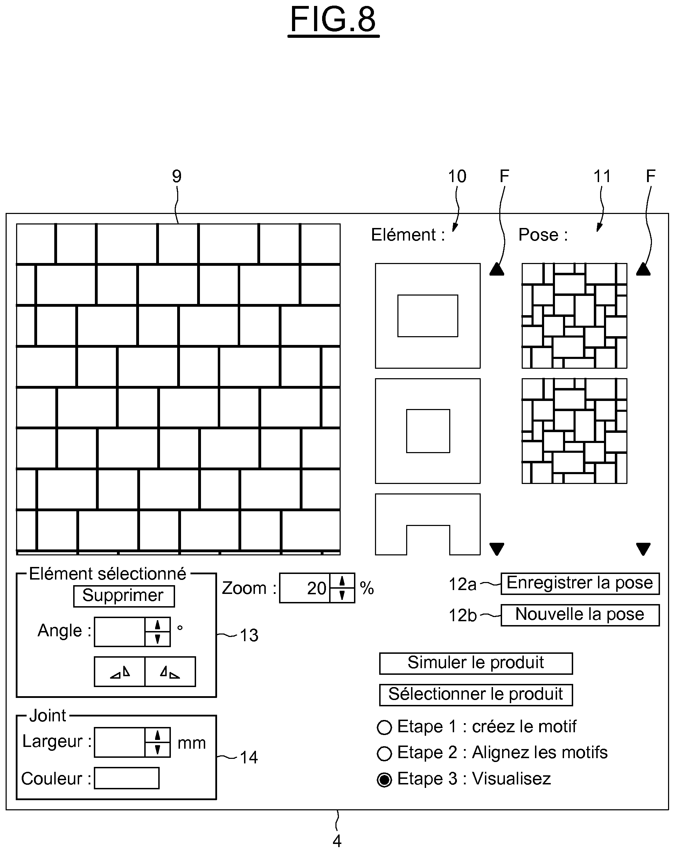

- les figures 8 et 9 montrent l'étape de visualisation des motifs assemblés, pour deux couleurs de joint sélectionnées.

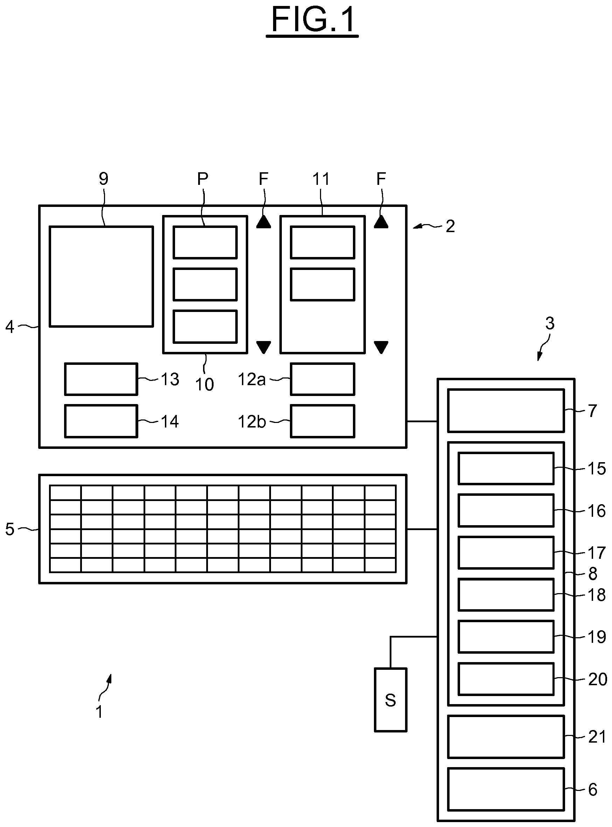

En se référant à la figure 1, on va tout d'abord décrire l'architecture générale d'un système de visualisation d'un revêtement de surface conforme à l'invention, désigné par la référence numérique générale 1.

Ce système est un outil de simulation destiné en premier lieu à permettre à un utilisateur de simuler la création d'un revêtement par assemblage de motifs par visualisation d'une image numérique du revêtement lors de son assemblage, et, en second lieu, à permettre la visualisation de changements de revêtement sur une surface afin de visualiser les effets procurés par une modification de revêtement sur les murs, le sol ou le plafond d'une pièce d'habitation.

Mais on ne sort pas du cadre de l'invention lorsque ce système est destiné à simuler un changement de revêtement pour tout autre type de local ou, de manière générale, pour tout autre type de surface.

De même, dans l'exemple de réalisation représenté, le système est agencé autour d'un microordinateur 2 associé à une unité de traitement 3, dans lequel est chargé un logiciel de simulation permettant de mettre en œuvre le procédé de simulation de revêtement.

Mais on ne sort pas davantage du cadre de l'invention lorsque l'algorithme de simulation est implanté au sein d'un serveur distant accessible depuis un ensemble de postes d'utilisateurs par l'intermédiaire d'un réseau informatique, tel que le réseau Internet.

Comme on le voit sur la figure 1, dans l'exemple de réalisation représenté, le microordinateur 2, qui est constitué par un équipement traditionnel, comporte essentiellement un écran 4 et un clavier 5 raccordés à l'unité de traitement 3.

Par exemple, dans le mode de mise en œuvre envisagé, le système 1 est destiné à permettre de simuler l'application d'un revêtement de type carrelage ou parquet, c'est-à-dire constitué par l'assemblage de motifs répétitifs constitués chacun de l'assemblage de pièces élémentaires sélectionnées.

Ainsi, l'unité centrale comporte, d'une part, des moyens de mémorisation 6 constituant une base de données dans laquelle sont chargées un ensemble de pièces élémentaires destinées à former un revêtement, par exemple un ensemble de types de carreaux ou lames de parquet destinés à être assemblés pour former des motifs élémentaires. L'unité centrale comporte, d'autre part, un premier module logiciel 7 destiné à constituer, conjointement avec l'écran 4, le clavier 5 et une souris S, une interface homme-machine destinée à présenter sur l'écran 4 un ensemble de fenêtres destinées à choisir les pièces élémentaires, à les assembler pour former des motifs élémentaires, et assembler les motifs élémentaires pour créer le revêtement, et un deuxième module logiciel 8 assurant la simulation proprement dite du revêtement.

Par exemple, le premier module logiciel 7 permet l'affichage, sur l'écran 2, d'une première fenêtre 9 constituant une fenêtre principale permettant la visualisation d'une pièce élémentaire, d'un motif ou du revêtement en cours de création, une deuxième fenêtre 10 associée à des flèches de défilement F permettant la sélection de pièces élémentaires, et une troisième fenêtre 11 associée également à des flèches de défilement F permettant la visualisation et le changement de schémas de pose précédemment enregistrés. Le premier module logiciel 7 propose également à l'utilisateur un premier icône 12a permettant d'enregistrer un type de pose créé et un deuxième icône 12b permettant la génération d'une nouvelle pose.

Deux fenêtres complémentaires 13 et 14 permettent respectivement de gérer la sélection d'un élément, par exemple en permettant sa suppression ainsi que de gérer son positionnement, en l'espèce sa position angulaire, et de choisir une largeur et une couleur de joint.

En ce qui concerne le deuxième module logiciel 8, il permet, en collaboration avec les fenêtres et icônes affichés sur l'écran 2, de créer un motif et d'assembler les motifs en vue de créer un revêtement.

Ce module 8 comporte à cet effet un premier étage 15 destiné à permettre de choisir une pièce élémentaire ; un deuxième étage 16 permettant de choisir une largeur de joint ; un troisième étage 17 permettant la création d'un motif ; un quatrième étage 18 permettant de configurer la répétition du motif ; un cinquième étage 19 permettant de choisir la couleur du joint ; et un sixième étage 20 permettant la mémorisation, la visualisation et l'exploitation de la pose.

Ainsi, après création et visualisation de la pose, celle-ci est chargée en mémoire 6 pour constituer une base de données permettant d'être ultérieurement récupérée par l'utilisateur.

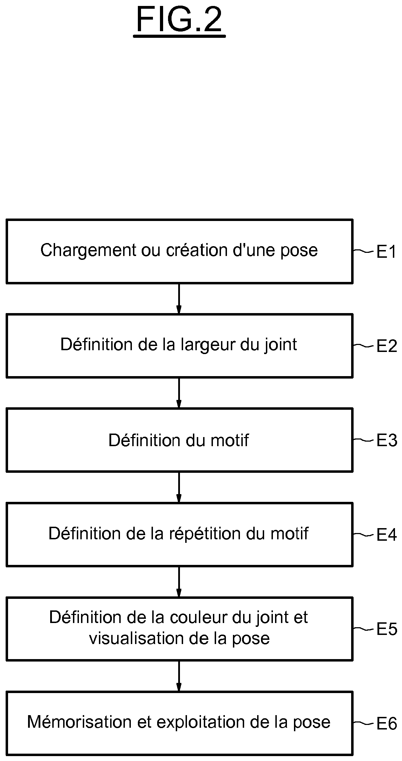

En se référant à la figure 2, pour la simulation d'un revêtement, au cours d'une première étape El, on décide de créer une pose ou de charger une pose préalablement stockée en mémoire 6.

Pour ce faire, soit on sélectionne une pose à l'aide de la fenêtre 11, soit on sélectionne l'icône 12b pour créer une nouvelle pose.

Dans le cas où l'utilisateur souhaite récupérer une pose préalablement créée, pour laquelle les motifs élémentaires et leur assemblage ont déjà été configurés, on peut directement procéder à l'application du revêtement sur une surface préalablement préparée.

Dans le cas contraire, c'est-à-dire si l'utilisateur désire créer une nouvelle pose, lors de l'étape E2 suivante, il convient de choisir une largeur de joint.

Lors de l'étape E3 suivante, on procède à la définition du motif. Pour ce faire, on sélectionne, à l'aide de la fenêtre 10, une pièce élémentaire et l'on procède à l'assemblage de ces pièces selon une configuration choisie par l'utilisateur de manière à créer un motif répétitif.

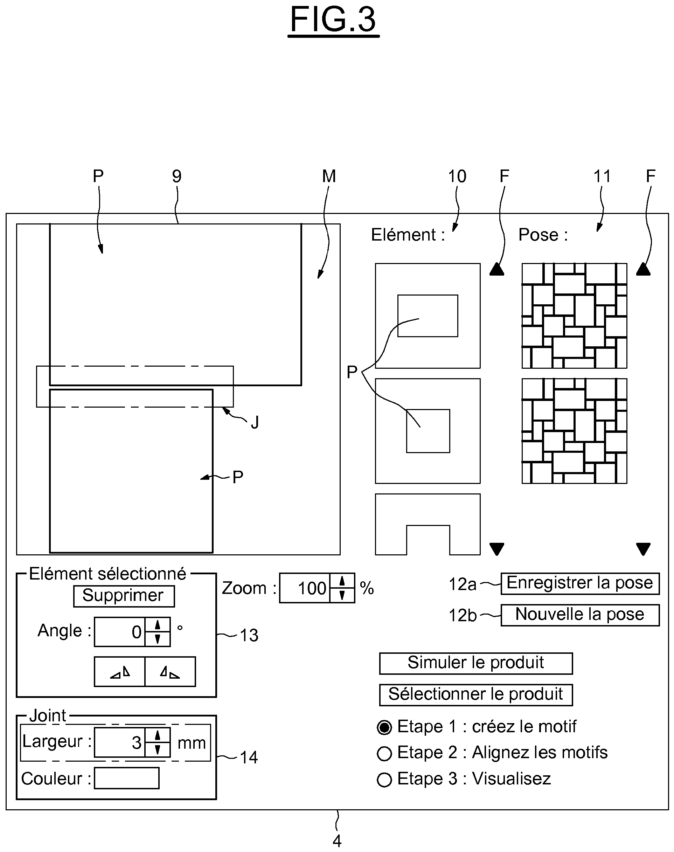

En se référant à la figure 3, par exemple, l'utilisateur positionne les pièces élémentaires P choisies les unes par rapport aux autres, en les rapprochant et en les orientant de manière à créer le motif élémentaire M. On notera que le deuxième module logiciel 8 permet de créer un effet de magnétisation qui permet à l'utilisateur, par simple rapprochement de deux éléments, de les solliciter les uns vers les autres, ou, en d'autres termes, de les attirer jusqu'à ce qu'ils soient rapprochés d'une distance correspondant à la largeur de joint.

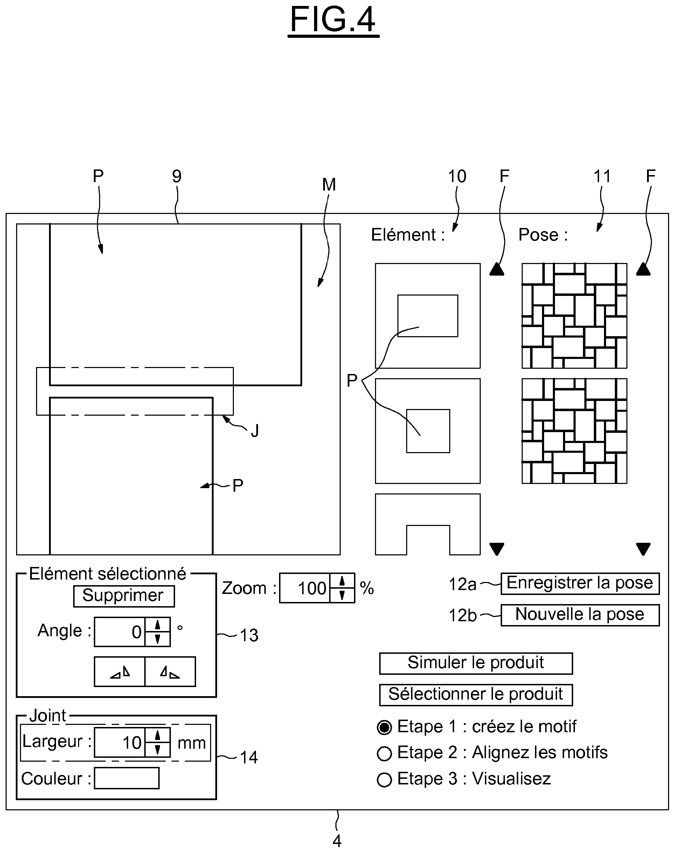

Ainsi, en se référant à la figure 4, une modification de la largeur de joint J saisie à l'aide de la fenêtre 14, permet, à la création du motif M, d'espacer ou de rapprocher les pièces élémentaires les unes par rapport aux autres.

On notera que selon les revêtements à créer, un motif peut comporter un ensemble quelconque de pièces, par exemple au moins une pièce.

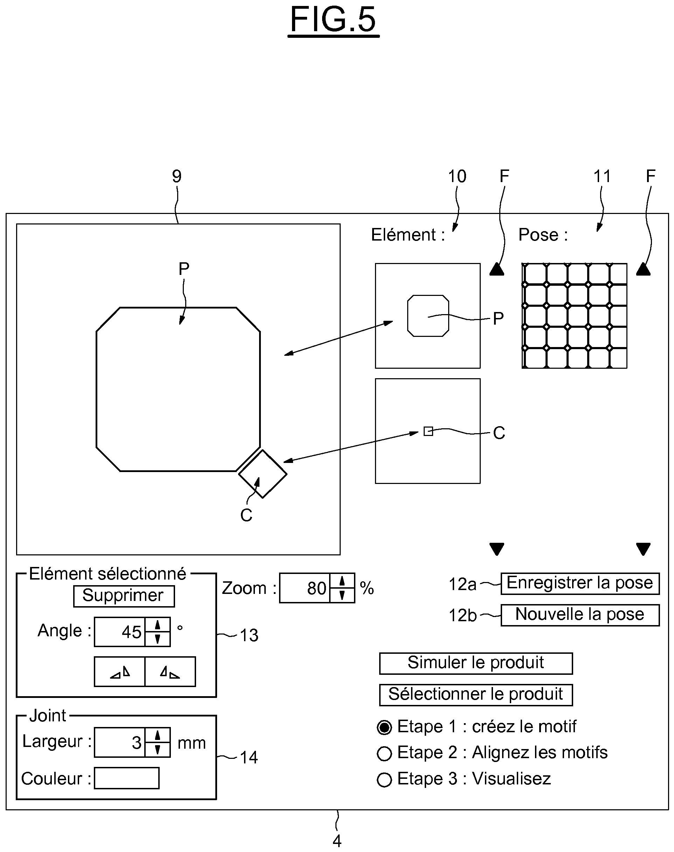

Dans l'exemple de réalisation de la figure 5, le motif comporte ici, d'une part, une pièce élémentaire principale P et, d'autre part, une pièce secondaire élémentaire, ici un cabochon C.

Lors de l'étape E4 suivante, on choisit la définition de la répétition du motif.

Bien entendu, cette étape peut être réalisée automatiquement, le module se chargeant de réaliser automatiquement la répétition du motif.

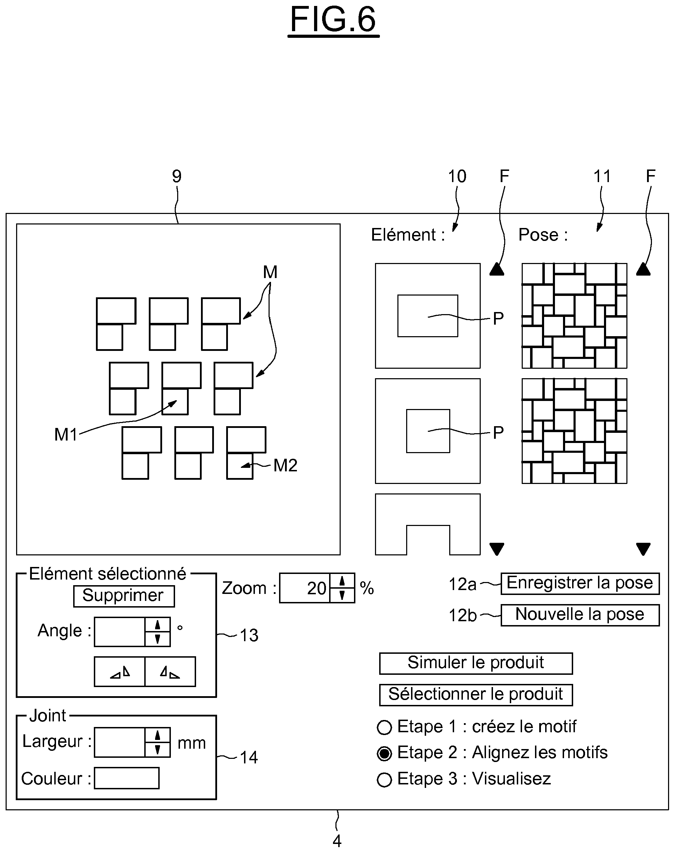

Ainsi, en se référant à la figure 6, lors de cette étape, il convient de positionner plusieurs motifs les uns par rapport aux autres puis de les rapprocher de manière à indiquer au module 8 le type de répétition que l'on souhaite obtenir. On notera que, au cours de cette étape, il convient simplement de procéder à l'assemblage d'un nombre restreint de motifs, le module 8 se chargeant d'assembler successivement l'ensemble des motifs de manière à obtenir le revêtement complet.

On notera également que, au cours de cette étape, par rapport à un motif M1 d'origine, le rapprochement d'un autre module M2 par rapport à ce module d'origine M1 provoque le rapprochement simultané de l'ensemble des autres motifs. Bien entendu, au cours de cette étape, le module logiciel 8 procure l'effet de magnétisation préalablement mentionné de manière à permettre un rapprochement automatique des motifs jusqu'à obtenir la largeur de joint présélectionnée.

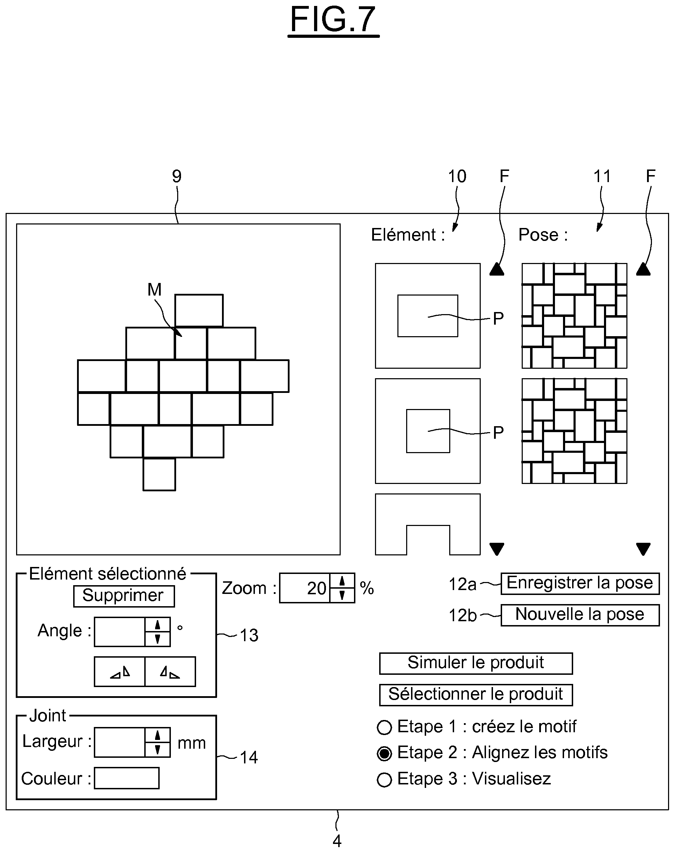

On obtient ainsi une répétition de motifs telle que visible sur la figure 7. Lors de l'étape E5 suivante, le deuxième module logiciel 8 acquiert une couleur de joint saisie par l'utilisateur au moyen de la fenêtre 14, puis présente à l'utilisateur, sur la fenêtre principale 9, la pose ainsi obtenue.

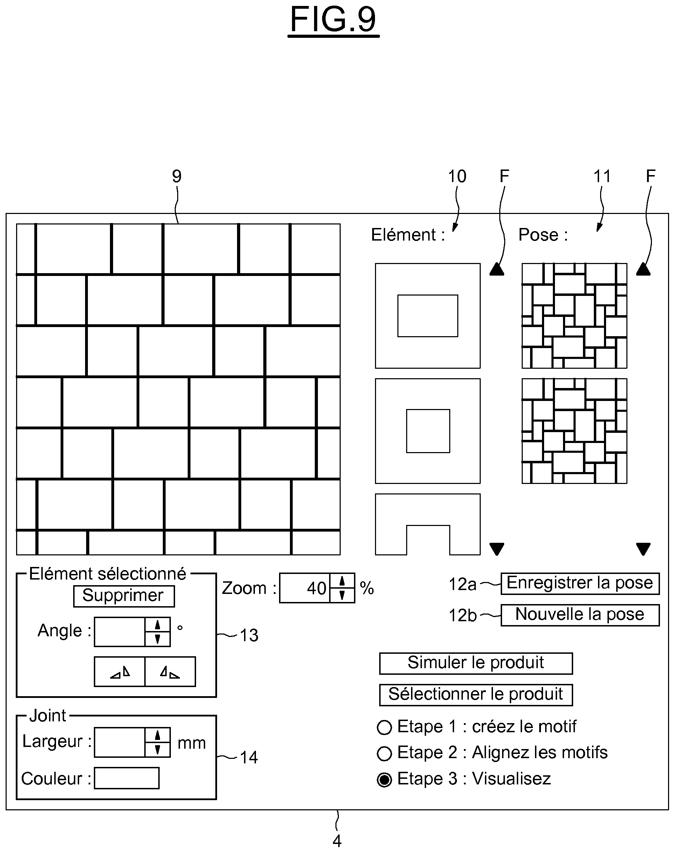

Bien entendu, à ce stade, comme visible sur la figure 9, l'utilisateur a la possibilité de modifier la couleur de joint de manière à visualiser la modification de l'impression visuelle d'ensemble ainsi obtenue.

Enfin, lors de l'étape E6 suivante, le deuxième module logiciel 8 procède à la mémorisation et l'exploitation de la pose.

Pour ce faire, il stocke tout d'abord en mémoire la pose ainsi créée en vue d'être, par la suite, visualisée et récupérée à partir de la fenêtre 11 visible sur l'écran 4.

Par ailleurs, lors de l'exploitation, le deuxième module logiciel 8 procède à l'application de l'image du revêtement sur une image numérique d'une surface à décorer.

L'unité centrale 3 comporte à cet effet un troisième module logiciel 21 de préparation de surface.

Ce troisième module 21 permet à un utilisateur de télécharger une image numérique ou de la récupérer en mémoire pour l'afficher sur l'écran 2.

Il permet en outre de délimiter le contour d'une surface à décorer, par exemple le contour d'un mur ou d'un sol, c'est-à-dire de délimiter une portion d'image représentant une surface sensiblement plane. Le troisième module 21 est par ailleurs dûment programmé pour appliquer une structure géométrique déformable prédéterminée, en l'espèce une grille, sur la portion d'image délimitée, et pour déformer la grille de manière à la faire correspondre à la portion d'image et acquérir, de la sorte, la perspective de la surface à décorer. Il met par ailleurs en œuvre une étape de mise à l'échelle, par laquelle l'utilisateur saisit manuellement, par exemple au moyen du clavier 5, une mesure d'une longueur de la surface délimitée, par exemple le long d'un ou de deux axes de la grille, cette grille pouvant ensuite être ajustée, par exemple en adaptant le nombre de lignes et de colonnes de la grille en fonction de la taille de la surface correspondant à la grille.

A partir de ces données géométriques ainsi acquises, le module 21 procède à l'adaptation du revêtement de manière à faire correspondre sa perspective à celle de l'image de la surface à décorer.

## Revendications

1. Procédé de visualisation d'un revêtement de surface, par création d'une image numérique du revêtement, comprenant les étapes de :
- choix du revêtement et détermination d'au moins une pièce élémentaire (P) du revêtement ;
- détermination d'un motif élémentaire (M) répétitif ;
- assemblage des motifs élémentaires ;
- visualisation des motifs assemblés,
le procédé comportant en outre les étapes de :
- application des motifs assemblés sur une image numérique de ladite surface, comprenant une mise en perspective de l'assemblage des motifs en fonction de la perspective de l'image, et
- acquisition de caractéristiques dimensionnelles de la surface,
le procédé étant **caractérisé en ce qu'**il comprend les étapes de :
- application d'une structure géométrique prédéterminée déformable sur l'image de la surface ; et
- déformation de la structure géométrique de manière à la faire coïncider à la perspective de la surface ;
l'application des motifs assemblés étant réalisée en fonction de la déformation de la structure géométrique et des caractéristiques dimensionnelles de la surface.

2. Procédé selon la revendication 1, **caractérisé en ce qu'**il comporte en outre une étape de choix d'un mode de répétition du motif élémentaire.

3. Procédé selon l'une des revendications 1 et 2, **caractérisé en ce qu'**au cours de la détermination du motif élémentaire répétitif, on crée ledit motif par assemblage d'un ensemble d'au moins une pièce.

4. Procédé selon la revendication 3, **caractérisé en ce que** l'on choisit en outre une largeur de joint (J) entre les pièces du revêtement.

5. Procédé selon l'une quelconque des revendications 1 à 4, **caractérisé en ce que** lors de la détermination d'un motif élémentaire et lors de l'assemblage des motifs élémentaires, on sélectionne sur un écran (4) un des éléments ou motifs à apparier, on oriente les éléments ou motifs sélectionnés, et on les rapproche de manière à former le motif ou ledit assemblage de motifs.

6. Procédé selon la revendication 5, **caractérisé en ce que** le rapprochement comprend une magnétisation tendant à solliciter les éléments ou motifs sélectionnés les uns vers les autres jusqu'à une distance correspondant à une largeur de joint (J).

7. Procédé selon l'une quelconque des revendications 1 à 6, **caractérisé en ce qu'**au cours de l'assemblage des motifs, le déplacement de l'un des motifs provoque un déplacement correspondant de motifs préalablement assemblés par rapport à un motif d'origine.

8. Procédé selon l'une quelconque des revendications 1 à 7, **caractérisé en ce qu'**il comporte une étape de choix de couleur de joint (J).

9. Procédé selon l'une quelconque des revendications 1 à 8, **caractérisé en ce qu'**il comporte une étape de mise en mémoire de motifs élémentaires de pose de revêtement et/ou d'assemblage de motifs pour chaque revêtement choisi.

10. Système de visualisation d'un revêtement d'une surface pour la mise en œuvre d'un procédé selon l'une quelconque des revendications 1 à 9, comportant :
- un dispositif d'affichage apte à afficher des pièces de revêtement et des motifs appariés;
- une unité de traitement associée à une interface homme-machine adaptée pour choisir un revêtement et déterminer au moins une pièce élémentaire du revêtement ; déterminer un motif élémentaire répétitif ; et assembler les motifs élémentaires,
- des moyens pour appliquer des motifs assemblés sur une image numérique de ladite surface, aptes à mettre en œuvre une mise en perspective de l'assemblage des motifs en fonction de la perspective de l'image, et
- un module programmé pour acquérir des caractéristiques dimensionnelles de la surface,
**caractérisé en ce que** le module est configuré pour appliquer une structure géométrique prédéterminée déformable sur l'image de la surface, et pour déformer la structure géométrique de manière à la faire coïncider à la perspective de la surface, les moyens pour appliquer des motifs assemblés sur une image numérique de ladite surface étant configurés pour réaliser l'application des motifs assemblés en fonction de la déformation de la structure géométrique et des caractéristiques dimensionnelles de la surface.

11. Système selon la revendication 10, **caractérisé en ce que** l'unité de traitement est adaptée pour choisir un mode de répétition du motif élémentaire.

12. Système selon l'une des revendications 10 et 11, **caractérisé en ce qu'**il comporte en outre une base de données (6) dans laquelle sont stockés un ensemble de pièces de revêtement et un ou plusieurs motifs prédéterminés pour chaque pièce.

## Patentansprüche

1. Verfahren zur Visualisierung einer Oberflächenbeschichtung durch Erzeugung eines digitalen Bilds der Beschichtung, umfassend die Schritte:
- Wählen der Beschichtung und Bestimmen von mindestens einem elementaren Teil (P) der Beschichtung;
- Bestimmen eines sich wiederholenden elementaren Musters (M) ;
- Zusammenfügen von elementaren Mustern;
- Visualisieren von zusammengefügten Mustern,
wobei das Verfahren außerdem die Schritte umfasst:
- Aufbringen von zusammengefügten Mustern auf ein digitales Bild der Oberfläche, umfassend ein Bringen der Zusammenfügung von Mustern in Perspektive entsprechend der Perspektive des Bilds, und
- Erfassen von Dimensionscharakteristika der Oberfläche,
wobei das Verfahren **dadurch gekennzeichnet ist, dass** es die Schritte umfasst:
- Aufbringen einer verformbaren vorherbestimmten geometrischen Struktur auf das Bild der Oberfläche; und
- Verformen der geometrischen Struktur, um sie mit der Perspektive der Oberfläche abzugleichen;
wobei das Aufbringen von zusammengefügten Mustern entsprechend der Verformung der geometrischen Struktur und Dimensionscharakteristika der Oberfläche durchgeführt wird.

2. Verfahren nach Anspruch 1, **dadurch gekennzeichnet, dass** es außerdem einen Schritt eines Wählens einer Wiederholungsweise des elementaren Musters umfasst.

3. Verfahren nach einem der Ansprüche 1 und 2, **dadurch gekennzeichnet, dass** im Laufe des Bestimmens des sich wiederholenden elementaren Musters das Muster durch Zusammenfügen einer Gesamtheit von mindestens einem Teil erzeugt wird.

4. Verfahren nach Anspruch 3, **dadurch gekennzeichnet, dass** außerdem eine Breite einer Verbindungsstelle (J) zwischen den Teilen der Beschichtung gewählt wird.

5. Verfahren nach einem der Ansprüche 1 bis 4, **dadurch gekennzeichnet, dass** während dem Bestimmen eines elementaren Musters und während dem Zusammenfügen von elementaren Mustern auf einem Bildschirm (4) eines von zu paarenden Elementen oder Mustern ausgewählt wird, die ausgewählten Elemente oder Muster ausgerichtet werden und sie angenähert werden, um das Muster oder die Zusammenfügung von Mustern zu bilden.

6. Verfahren nach Anspruch 5, **dadurch gekennzeichnet, dass** das Annähern eine Magnetisierung umfasst, die dazu führt, dass die ausgewählten Elemente oder Muster bis zu einem Abstand, der einer Breite einer Verbindungsstelle (J) entspricht, zueinander gezogen werden.

7. Verfahren nach einem der Ansprüche 1 bis 6, **dadurch gekennzeichnet, dass** im Laufe des Zusammenfügens von Mustern die Verschiebung eines der Muster eine entsprechende Verschiebung von zuvor zusammengefügten Mustern in Bezug auf ein Ursprungsmuster bewirkt.

8. Verfahren nach einem der Ansprüche 1 bis 7, **dadurch gekennzeichnet, dass** es einen Schritt eines Wählens einer Farbe einer Verbindungsstelle (J) umfasst.

9. Verfahren nach einem der Ansprüche 1 bis 8, **dadurch gekennzeichnet, dass** es einen Schritt eines Speicherns von elementaren Mustern einer Beschichtungsausrichtung und/oder einer Zusammenfügung von Mustern für jede gewählte Beschichtung umfasst.

10. System zur Visualisierung einer Oberflächenbeschichtung durch Umsetzen eines Verfahrens nach einem der Ansprüche 1 bis 9, umfassend:
- eine Anzeigevorrichtung, die zum Anzeigen von Beschichtungsteilen und gepaarten Mustern geeignet ist;
- eine Verarbeitungseinheit, die mit einer Mensch-Maschine-Schnittstelle assoziiert ist, die zum Wählen einer Beschichtung und Bestimmen von mindestens einem elementaren Teil der Beschichtung; Bestimmen eines sich wiederholenden elementaren Musters; und Zusammenfügen der elementaren Muster eingerichtet ist,
- Mittel zum Aufbringen von zusammengefügten Mustern auf ein digitales Bild der Oberfläche, die zum Umsetzen eines Bringens der Zusammenfügung von Mustern in Perspektive entsprechend der Perspektive des Bilds geeignet sind, und
- ein programmiertes Modul zum Erfassen von Dimensionscharakteristika der Oberfläche,
**dadurch gekennzeichnet, dass** es das Modul zum Aufbringen einer verformbaren vorherbestimmten geometrischen Struktur auf das Bild der Oberfläche und zum Verformen der geometrischen Struktur, um sie mit der Perspektive der Oberfläche abzugleichen, konfiguriert ist, wobei die Mittel zum Aufbringen von zusammengefügten Mustern auf ein digitales Bild der Oberfläche zum Durchführen des Aufbringens von zusammengefügten Mustern entsprechend der Verformung der geometrischen Struktur und Dimensionscharakteristika der Oberfläche konfiguriert sind.

11. System nach Anspruch 10, **dadurch gekennzeichnet, dass** die Verarbeitungseinheit zum Wählen einer Wiederholungsweise des elementaren Musters eingerichtet ist.

12. System nach einem der Ansprüche 10 und 11, **dadurch gekennzeichnet, dass** es außerdem eine Datenbank (6) umfasst, in der eine Gesamtheit von Beschichtungsteilen und ein oder mehrere vorherbestimmte Muster für jedes Teil gespeichert werden.

## Claims

1. Method for viewing a surface coating, by creating a digital image of the coating, comprising the steps of:
- choosing the coating and determining at least one elementary part (P) of the coating;
- determining a repeating elementary pattern (M);
- assembling the elementary patterns;
- viewing the assembled patterns,
the method further including the steps of:
- applying the assembled patterns onto a digital image of said surface, comprising the application of a perspective onto the assembly of the patterns according to the perspective of the image, and
- acquiring dimensional characteristics of the surface,
the method being **characterised in that** it comprises the steps of:
- applying a deformable predetermined geometric structure onto the image of the surface; and
- deforming the geometric structure in such a way as to make it coincide with the perspective of the surface,
the application of the assembled patterns being carried out according to the deformation of the geometric structure and the dimensional characteristics of the surface.

2. Method according to claim 1, **characterised in that** it further includes a step of choosing a mode of repetition of the elementary pattern.

3. Method according to one of claims 1 and 2, **characterised in that** when determining the repeating elementary pattern, said pattern is created by assembling an assembly of at least one part.

4. Method according to claim 3, **characterised in that** a joint width (J) between the parts of the coating is further chosen.

5. Method according to any one of claims 1 to 4, **characterised in that** when determining an elementary pattern and when assembling the elementary patterns, one of the elements or patterns to be paired is selected on a screen (4), the selected elements or patterns are oriented, and they are brought closer together in such a way as to form the pattern or said assembly of patterns.

6. Method according to claim 5, **characterised in that** the bringing closer together comprises a magnetisation tending to stress the selected elements or patterns towards each other up to a distance corresponding to a joint width (J).

7. Method according to any one of claims 1 to 6, **characterised in that** when assembling the patterns, the movement of one of the patterns causes a corresponding movement of patterns previously assembled with respect to a starting pattern.

8. Method according to any one of claims 1 to 7, **characterised in that** it includes a step of choosing a joint colour (J).

9. Method according to any one of claims 1 to 8, **characterised in that** it includes a step of placing in memory elementary patterns of coating installation and/or of assembly of patterns for each coating chosen.

10. System for viewing a coating of a surface for the implementation of a method according to any one of claims 1 to 9, including:
- a display device capable of displaying coating parts and paired patterns;
- a processing unit associated with a man-machine interface adapted to choose a coating and determine at least one elementary part of the coating; determine a repeating elementary pattern; and assemble the elementary patterns;
- means for applying assembled patterns onto a digital image of said surface, capable of implementing the application of a perspective onto the assembly of the patterns according to the perspective of the image; and
- a module programmed to acquire dimensional characteristics of the surface,
**characterised in that** the module is configured to apply a deformable predetermined geometric structure onto the image of the surface, and to deform the geometric structure in such a way as to make it coincide with the perspective of the surface, the means for applying assembled patterns onto a digital image of said surface being configured to carry out the application of the assembled patterns according to the deformation of the geometric structure and the dimensional characteristics of the surface.

11. System according to claim 10, **characterised in that** the processing unit is adapted to choose a mode of repetition of the elementary pattern.

12. System according to one of claims 10 and 11, **characterised in that** it further includes a database (6) in which a set of coating parts and one or more predetermined patterns for each part are stored.
